# EUROPEAN PATENT SPECIFICATION

(11) **EP 3 482 511 B1**
(45) Date of publication and mention of the grant of the patent: **07.06.2023**
(21) Application number: 17735137.6
(22) Date of filing: 04.07.2017
(51) Int. Cl.: H04L 1/00, H04W 72/04, G01D 4/00

(54) **RADIO FREQUENCY COMMUNICATION SYSTEM WITH IMPROVED ERROR CORRECTION**
HOCHFREQUENZ-KOMMUNIKATIONSSYSTEM MIT VERBESSERTER FEHLERKORREKTUR
SYSTÈME DE COMMUNICATION RADIOFRÉQUENCE AVEC CORRECTION D'ERREUR AMÉLIORÉE

(30) Priority: 06.07.2016 EP 16178082; 31.08.2016 DK 201670666
(43) Date of publication of application: 15.05.2019
(73) Proprietor: Kamstrup A/S, 8660 Skanderborg (DK)
(72) Inventor: CHRISTIANSEN, Johnny Dørken, 8464 Galten (DK); HALD, Flemming, 8370 Hadsten (DK)
(74) Representative: Plougmann Vingtoft a/s
(86) International application number: PCT/EP2017/066704
(87) International publication number: WO 2018/007417

(56) References cited:
- US-A1- 2011 050 456
- US-A1- 2015 229 743

## Description

### FIELD OF THE INVENTION

The present invention relates to a radio frequency communication system for transmitting a data packet between a transmitter device and a receiver device, and wherein the receiver device is configured to receive, decode and correct errors in a bit sequence indicative the data packet including a main part encoded according to a standard protocol for wireless communication.

### BACKGROUND OF THE INVENTION

Automatic meter reading (AMR) systems and advanced meter infrastructure (AMI) systems, in the following commonly referred to as meter reading systems, are generally known in the art. Utility companies use such meter reading systems to read and monitor customer meters remotely, typically using radio frequency (RF) communication. AMR and AMI systems, commonly known as meter communication systems, increase the efficiency and accuracy of collecting readings and managing customer billing.

AMR systems generally use a mobile RF communication network for collecting meter readings and data, whereas AMI systems use a fixed RF communication network. Especially in AMI systems there may be multiple intermediate collectors located throughout a larger geographical area, each collector in turn communicating with a central back end system, for example by using a wide area network (WAN) or other suitable communication infrastructure.

AMI systems may also utilize a system of repeaters or relay devices that expand the coverage area for each reader by forwarding meter readings and data. In a mobile network AMR environment, a handheld, vehicle-mounted, or otherwise mobile reader device with RF communication capabilities is used to collect data from meter devices as the mobile reader is moved from place to place.

A metering system for metering the consumption of a utility may include meter devices in the form of smart meters provided with communication devices for transmitting RF signals and receiver devices for receiving said RF signal. The communication devices may be configured to periodically transmit data packets including data representing multiple meter readings and other meter data as a function of time. Such data packets may be processed, transmitted and revised by the receiver device based on a standard signaling protocol, such as the wireless M-BUS protocol.

Meter devices are typically battery-powered, and consequently have a finite amount of energy available for their service cycle. Because the service cycle for meter devices is typically 10-20 years, to reduce cost associated with meter exchange or battery replacement, energy conservation is a major design criterion. However, for utility meters having electrical mains available as a power source, energy conservation related to communications is also desirable.

As packet transmission accounts for a substantial portion of the energy usage in meter devices, more efficient transmission and reception can have a significant impact on the energy use, i.e. the battery lifetime of the meter device. Thus, if the power used for transmitting data packets can be reduced, this will have a positive effect on the total power budget of the meter device. However, the transmission power used for communication purposes is often closely related to transmission quality and reception reliability.

Another important design criterion for meter devices is interoperability and the need to support existing communication infrastructure. For example, it is desirable to be able to use a new meter device with an existing communication system. It may also be desirable to be able to use utility meters and associated communication devices from several manufactures in the same system. In addition, it may be desirable to be able to use a utility meter and associated communication device from one manufacture together with a communication system from another manufacture.

Still another important design criterion is communication reliability between meter devices, repeaters, collectors and the backend system. Meter readings and other data, such as alerts or sensor data, may be transmitted in the form of data packets from the meter devices to the backend system, and the backend system may transmit data packets including commands or updates, to the meter devices. Reliability has to do with the robustness of the communication system and the ability of the system to successfully transmit a data packet from the sender, via possible intermediate devices, to the correct receiver. Data packets may be received in error for various reasons, such as increased path loss, collision, congestion or the like. If a packet does not successfully reach the receiver, it is necessary to retransmit the packet, which is undesirable. A measure for communication reliability is packet error rate (PER), which ratio is the ration between incorrectly received data packets and the total number of received packets. Another measure for the quality of the communication link between sender and receiver is bit error rate (BER). PER and BER are closely related and an increase in BER will result in higher PER.

US 2011/0050456 A1 discloses an automatic meter reading (AMR) system that utilizes versatile radio packets that are recognizable by AMR system receivers. The versatile radio packet includes a packet preamble portion, a packet body portion, and a packet validation portion. The packet preamble portion has a frame synchronization bit sequence that is recognizable by AMR system receivers. The packet preamble portion also has a packet type identifier field and a packet length field. The packet body portion includes at least an endpoint serial number field and a message, where at least the message has a variable length.

US 2015/0229743 A1 discloses a communication system wherein a communication protocol with variable error correction code is used . The error correction code is selected to be adequate for the signal to noise ratio or distortion in the communication channel, prior to encoding and transmitting the data packet.

In the effort to provide interoperability between RF communication devices, standard protocols, such as the wireless M-Bus standard in Europe, has been created. By designing devices according to such standard protocols, interoperability may be secured. Further, to provide more reliable communication and possibly correct bit errors, the use of various error correction techniques, such as forward error correction (FEC) may be incorporated in such protocols. However, the level of error correction used in an RF communication protocol is often a trade-off between an acceptable BER and data packet length. A higher level of error correction requires longer data packets, which again increases the power used for transmitting data packets. On the other hand, packets including more error-correction code may reduce the number of transmissions needed for securing the successful transmission of a data packet. Therefore, standard protocols are usually created as a compromise, often between multiple industry players with varying needs. Consequently, standard protocols may not always provide the optimal solution and deliver the needed BER. A need therefore exists for a communication protocol that improves the BER while maintaining interoperability through compliance with a standard protocol.

### OBJECT OF THE INVENTION

It is an object of the present invention to provide an alternative to the prior art. In particular, it may be seen as an object of the present invention to provide a system and a method for reducing bit error rate or signal transmission in a smart grid while maintaining compatibility and interoperability between existing and new system components.

### SUMMARY OF THE INVENTION

Thus, the above described object and several other objects are intended to be obtained in a first aspect of the invention by providing a radio frequency communication system comprising at least one transmitter device configured for encoding and transmitting a data packet to a receiver device; the receiver device being configured to receive, decode and correct errors in a bit sequence indicative of the data packet; the data packet including a main part encoded according to a standard protocol for wireless communication, the main part including at least a packet preamble portion, a synchronization portion, a packet length field, a payload portion, and an error correction portion including error-correction code for use by the receiver device to correct errors in the bit sequence;
characterized in that the receiver device is configured to receive additional information about the length of the main part of the data packet adapted to improve decoding of the bit sequence indicative of the data packet, whereby performance of the error correction applied by the receiver device may be improved.

By providing the receiver device with additional information about packet length**,** or further, information for improving synchronization, the receiver device is frontloaded with information to improve decoding of the information contained in the data packet. By improving decoding the bit error rate (BER) may be reduced, which may result in lower packet error rates. Improving the decoding of the data packet may also result in improved error correction, which also may reduce the packet error rate.

Decoding of the bit sequence indicative of the data packet is used in the sense that the receiver extracts data or information from the received signal having the form of a bit sequence. In other words, the receiver interprets a bit sequence generated on the basis of a body of information, to retrieve said body of information. Further, the wording of the data packet or a signal or bit sequence indicative of the data packet is used interchangeably throughout the specification. When describing that a data packet is sent, received or decoded, it should be readily understood that it is a signal, bit sequence or other data stream indicative of the data packet which is being processed. In the radio frequency communication system according to the invention, the receiver device receives additional information about the length of the main part of the data packet, where the information about the length is adapted to improve decoding of the error correction portion of the main part. Additionally, the receiver device may receive additional information for improving synchronization of the receiver device to improve decoding of the bit sequence indicative of the main part of the data packet.

According to a further aspect, the data packet used in the communication system may include a supplementary part including a preamble portion and an enhanced length field providing the additional information about the length of the main part of the data packet. The supplementary part of the data packet may be received by the receiver device before the main part, and saved in a buffer memory of the receiver device, and the receiver may be configured to use the synchronization portion of the main part for synchronizing the receiver device to decode the supplementary part of the data packet. Additionally, the supplementary part may further include an extended synchronization portion providing the additional information for improving synchronization of the receiver device.

According to a still further aspect, the supplementary part of the data packet may be received by the receiver device prior to receiving the main part of the data packet. Alternatively, the supplementary part may be received by the receiver device with a predetermined time delay after reception of the synchronization portion of the main part of the data packet.

### BRIEF DESCRIPTION OF THE FIGURES

The radio device and associated radio protocol according to the invention will now be described in more detail with regard to the accompanying figures. The figures show one way of implementing the present invention and is not to be construed as being limiting to other possible embodiments falling within the scope of the attached claim set.
Figure 1 illustrates a meter reading system comprising a plurality of consumption meters and various data collection devices,
Figure 2a-b show diagrams illustrating standard compliant radio packets including a supplementary part transmitted before a standard compliant part, and
Figure 3a-c show diagrams illustrating standard compliant radio packets including a supplementary part transmitted after a standard compliant part.

### DETAILED DESCRIPTION OF AN EMBODIMENT

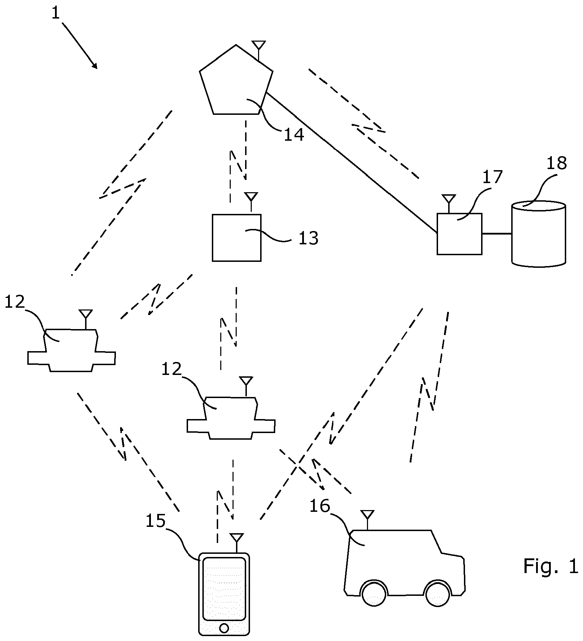

Referring to Fig. 1, a radio frequency communication system 1 in the form of a meter reading system is shown. The meter reading system comprises a plurality of meter devices 12 installed at respective points of use and various receiver devices in the form of repeater devices 13, collector devices 14, and mobile collection devices 15, 16. If the meter reading system is setup for one-way communication only, the meter devices are dedicated transmitter devices configured for transmitting data packets to the receiver devices. However, if the meter reading system is setup for two-way communication, the meter devices and the receiver devices 13, 14, 15, 16 may function as both transmission devices and receiver devices.

Each meter device measures the amount of a specific utility, such as water or electricity, delivered to the respective point of use via the utility network and stores corresponding consumption data in a memory of the meter device. In a processor of the meter device, consumption data is converted into data packets suitable for radio frequency communication, and the processor instructs a transmitter of the meter device to transmit the data packets to a receiver. In a two-way communication system, the transmitter of the meter device may be a transceiver configured to transmit and receive data packets, respectively.

Fig. 1 shows various receiver devices and one embodiment of a communication system may incorporate different types of receiver devices, such as a combination of fixed and mobile receiver devices. In a system using fixed collector devices 14, a number of repeater devices 13 may be provided to relay data packets from meter devices distributed over a large geographical area. The number of repeater devices and collector devices required for a network depends amongst others on the size and topology of the network. From the collector devices, data from a plurality of meter devices is transmitted to a backend system 17 including a server 18 for storing, processing and analyzing consumption data. In a two-way system, data may also be transmitted in the opposite direction, from the backend system to the respective meter devices. Further, one meter device may be configured for communication with multiple receiver devices, and a meter device may be configured as a receiver device for relaying data packets from another meter device.

It is understood by the skilled person that other network devices such as router devices or meter devices equipped with different communication modules may also be included in the communication system. At least communication between meter devices and collector and/or repeater devices is based on RF communication, whereas the transmissions between collector devices and repeater devices and the backend system may be of any suitable type, such as wired or wireless. Further, it is understood by the skilled person that the shown meter reading system only includes a limited number of network components for illustrative purposes.

As described above each meter device of Fig. 1 may be a transmitter device 12, which is configured for encoding and transmitting a data packet 2 to a receiver device. The receiver device on the other hand being configured to receive and decoded the transmitted data packet. When a data packet is encoded and transmitted over a communication medium, the signal indicative of the data packet is attenuated, affected by limited bandwidth and subject to transmission line noise, all of which may contribute to distort the signal. Consequently, when the distorted signal is received by and decoded in the receiver device, bit errors may occur. Depending on the bit error rate (BER), the bit errors may be corrected using forward error correction (FEC). However, if the BER is too high, the reception of the data packet is unsuccessful.

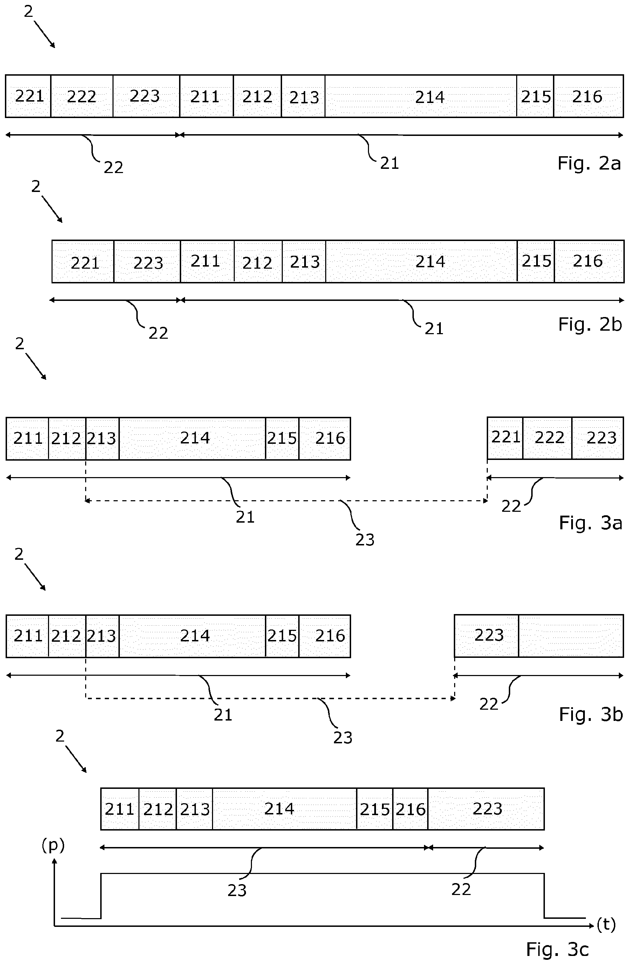

Referring to Fig. 2a and 2b, one embodiment of a data packet for transmission between a transmitter device 12 and a receiver device of the communication system described above is shown. The data packet includes a main part 21 encoded according to a standard protocol for wireless communication, such as the wireless M-Bus. The main part includes a packet preamble portion 211, a synchronization portion 212, a packet length field 213, a payload portion (214), and an error correction portion 216 including error-correction code for use by the receiver device to correct errors in the bit sequence.

In some applications, the error-correction code contained in the main part may be sufficient to detect and correct bit errors. However, in other applications the error-correction code included is insufficient, for example due to transmission distances or other transmission conditions.

An obvious solution to an insufficient amount of error-correction code would be to incorporate more error-correction. However, doing so would result in non-compliance with the standard protocol, which may be undesirable and unnecessary in other some applications. The claimed invention therefore suggests an alternative solution wherein the effect or gain of the error-correction code already included in the main part of the data packet, i.e. the standard compliant part, is improved. By improving the effect of the error correction code, a higher BER may be accepted in a given transmission without negatively affecting the packet error rate (PER). Further, by improving the effect of the error-correction code already in the standard compliant packet, without actually changing the code, standard compliant receivers and transmitters may still be used in a communication system implementing embodiments of the invention. Hereby, error-correction can be selectively implemented in parts of a communication system where error-correction according to a standard is insufficient.

As forward error correction and error-correction code are concepts know to the skilled person, this will not be described in further detail.

According to one embodiment of the invention, the effect of error-correction code is improved by the receiver device being configured to receive additional information adapted to improve decoding of a bit sequence indicative of the data packet. Improving the effect of the error-correction code may lead to a more effective error correction process by the receiver device, which in turn results in a higher BER being acceptable.

The additional information that is used to improve decoding is more robust information about the length of the main part of the data packet. By knowing the length of the received data packet, the receiver device is able to decode the bit sequence. If the packet length is received in error, the receiver device is unable to correctly decode the bit sequence.

Another type of additional information that may be used to improve decoding is information that improves byte synchronization in the receiver device. By providing a more sensitive byte synchronization, the synchronization becomes resistant to noise, the received bits are more likely to be arranged in the correct positions, thereby reducing BER and PER.

The additional information may be provided to the receiver device with communication channels different from the channel used for the primary communication, i.e. transmission of the above mentioned data packets. Such transmission channels may include a similar or an alternative communication medium. The additional information, such as the information about packet length, may also be input into the receiver device at the time of manufacturing or configuration, or the receiver device may be supplied with the additional information at a time of reconfiguration. In a system comprising multiple receiver devices, the receiver devices may be configured to receive and process data packets with a finite number of different lengths. In one embodiment a receiver device may thus be configured to receive and process packets having 2-4 different packet lengths. When a data packet is received, the receiver may apply a trial and error procedure to identify the correct packet length to apply in the decoding process. Further, all receiver devices may not be configured to receive and process packets having the same packet lengths. Some receiver devices may be configured to receive data packets having one packet length, whereas other receiver devices are configured for receiving data packets having other packet lengths.

Referring again to Fig. 2a and 2b, the additional information may also be provided to the receiver device as a part of the data packet. In the shown embodiments, the additional information is provided in a supplementary part 22 of the data packet 2. The supplementary part shown in Fig. 2a includes a preamble portion 221, an extended synchronization portion 222 and an enhanced length field 223. Hereby the receiver device may use information obtained from the supplementary part of the data packet to improve interpretation or decoding of the main part. More precise or robust decoding leads to fewer bit errors which in turn improves the effect of the error-correction code included in the standard compliant part of the data packet.

The enhanced length field 223 may include a body of length information, such as one byte, that is repeated a number of times, such as twice. By performing a majority vote on the received plurality of bytes of length information, possible errors may be corrected. Alternatively, the enhanced length field, in addition to the length information, comprises other forward error correction codes, such as the Hamming code. Error correction code associated with the enhanced length field is provided to correct errors in the length information exclusively.

The extended synchronization portion 222 includes more synchronization bits than the synchronization portion of the main part of the data packet. In one embodiment the synchronization portion includes 50% more bytes than the synchronization portion of the main part, such as an additional 1-2 bytes, to improve byte synchronization and reduce BER.

In a communication system incorporating standard complaint receiver devices as well as receiver devices configured to utilize data packets according to the present invention, the same data packet format may be transmitted to both types of receiver devices. Thereby system complexity is reduced, while improved error-correction may be achieved in receiver devices configured to utilize data packets according to the present invention.

Referring to Fig. 2b, the supplementary part of the data packet is configured to be transmitted before the main part, but the supplementary part includes only an enhanced length field 223 (in addition to the preamble portion 221). As the supplementary part is received by the receiver device before the main part including the synchronization portion 212, the additional part cannot be decoded upon reception and is therefore initially saved in a buffer memory of the receiver device. When the receiver device has been synchronized using the synchronization portion of the main part, the receiver device proceeds to the decoding of the additional information to extract the length of the main part of the data packet.

Referring to Fig. 3a and 3b, according to another embodiment, the data packet may be encoded such that the supplementary part is received by the receiver device after the main part, more specifically with a predetermined time delay 23 after reception of the synchronization portion of the main part. Using a predetermined time interval 23 is advantageous if the packet length field 213 of the main part is insufficient to ensure proper decoding of the data packet. Thus by using a predetermined timer interval, the additional information can be detected without regard to the length information included in the main part. When the receiver device has retrieved the length information from the additional part, this may be used to improve decoding of the main part of the data packet received earlier.

According to one example, a standard compliant packet may comprise a total of 128 bytes (corresponding to the main part of a data packet according to the present invention). The 128 bytes may be distributed with 64 bytes for the packet preamble portion 211, the synchronization portion 212, the packet length field 213 and the payload portion 214, and 64 bytes for the error correction portion 216 including the header 215 and the FEC block. For such a packet, a BER below 10⁻³ may result in an acceptable PER. The bit error rate may be greatly influenced by the length of the synchronization portion or the level of protection enjoyed by specific portions of the packet, based on the error-correction code included in the standard compliant packet.

In an exemplary embodiment of a radio frequency communication system utilizing data packets having a format according to the present invention, a data packet 1 may comprise a total of 128 bytes for the main part as described above. In addition to the bytes of the main part, the additional part may include an enhanced length field 223 of an additional 3 bytes and the extended synchronization portion 222 also including an additional 3 bytes. The additional preamble portion 221 may account for an additional 2-4 bytes totaling in 8-10 additional bytes or a 6-8% increase of the total data packet size.

The additional information including the enhanced length field and the extended synchronization portion may improve decoding of the data packet which in turn improves the effect of the error-correction code of the main part, resulting in a BER below 10⁻² being acceptable. The acceptable BER has thus risen from 10⁻³ to 10⁻². A 6-8% increase in the packet size thus renders possible a ninefold increase of the BER without negatively affecting the PER.

Referring to Fig. 3c, in an alternative embodiment the supplementary part 22 comprising at least an enhanced length field 223 may be transmitted following and without delay after the main part 21 of the data packet conforming to the existing standard protocol. As the length of the main part may be uncertain, the presence of the supplementary part 22 is detected based on the RF power in the transmission channel and information about the packet length of the supplementary part 22. The receiver device is configured to continuously monitor and analyze RF power in the transmission channel, and when the RF power level drops below a predetermined threshold level, the receiver device assumes that both the main part and the supplementary part of the data packet 2 have been received. By knowing the length of the supplementary part, the receiver is able to decode the supplementary part and acquire information about the length of the main part from the enhanced length field 223. Subsequently the length information is used to decode the main part including the payload portion 214.

## Claims

1. A radio frequency communication system (1) comprising at least one transmitter device (12) configured for encoding and transmitting a data packet (2) to a receiver device (13,14, 15,16);
the receiver device being configured to receive, decode and correct errors in a bit sequence indicative of the data packet;
the data packet including a standard compliant main part (21) encoded according to a standard protocol for wireless communication, the main part including at least a packet preamble portion (211), a synchronization portion (212), a packet length field (213), a payload portion (214), and an error correction portion (216) including error correction code for use by the receiver device to correct errors in the bit sequence;
**characterized in that** the receiver device is configured to receive additional information (222, 223) about the length of the main part (21) of the data packet (2) adapted to improve decoding of the bit sequence indicative of the data packet, whereby performance of the error correction applied by the receiver device may be improved.

2. A radio frequency communication system according to claim 1, wherein the receiver device receives additional information for improving synchronization (222) of the receiver device to improve decoding of the bit sequence indicative of the main part of the data packet.

3. A radio frequency communication system according to claim 1, wherein the data packet includes a supplementary part (22) including a preamble portion (221) and an enhanced length field (223) providing the additional information about the length of the main part of the data packet.

4. A radio frequency communication system according to claim 3, wherein the supplementary part is received by the receiver device before the main part, and saved in a buffer memory of the receiver device, and wherein the receiver is configured to use the synchronization portion of the main part for synchronizing the receiver device to decode the supplementary part of the data packet.

5. A radio frequency communication system according to claim 3, wherein the supplementary part further includes an extended synchronization portion (222) providing the additional information for improving synchronization of the receiver device to improve decoding of main part and the additional part of the data packet.

6. A radio frequency communication system according to claim 3 or 5, wherein the supplementary part is received by the receiver device prior to receiving the main part of the data packet.

7. A radio frequency communication system according to claim 3 or 5, wherein the supplementary part is received by the receiver device with a predetermined time delay (23) after reception of the synchronization portion of the main part of the data packet.

8. A radio frequency communication system according to claim 1, wherein the data packet includes a supplementary part (22) including an enhanced length field (223) providing the additional information about the length of the main part of the data packet and an enhanced error correction portion (222), and wherein the supplementary part is received by the receiver device with a predetermined time delay (23) after reception of the synchronization portion of the main part of the data packet.

## Patentansprüche

1. Hochfrequenz-Kommunikationssystem (1), umfassend mindestens einer Sendeeinrichtung (12), die zum Codieren und Senden eines Datenpakets (2) an eine Empfängereinrichtung (13, 14, 15, 16) konfiguriert ist;
wobei die Empfängereinrichtung dazu konfiguriert ist, eine das Datenpaket angebende Bitfolge zu empfangen, zu decodieren und Fehler darin zu korrigieren;
wobei das Datenpaket einen standardkonformen Hauptteil (21) beinhaltet, der gemäß einem Standardprotokoll für drahtlose Kommunikation codiert ist, wobei der Hauptteil mindestens einen Paketeinleitungsabschnitt (211), einen Synchronisationsabschnitt (212), ein Paketlängenfeld (213), einen Nutzlastabschnitt (214) und einen Fehlerkorrekturabschnitt (216) beinhaltet, der Fehlerkorrekturcode zur Verwendung durch die Empfängereinrichtung zur Korrektur von Fehlern in der Bitfolge beinhaltet;
**dadurch gekennzeichnet, dass** die Empfängereinrichtung dazu konfiguriert ist, zusätzliche Informationen (222, 223) über die Länge des Hauptteils (21) des Datenpakets (2) zu empfangen, dazu angepasst, die Decodierung der das Datenpaket angebenden Bitfolge zu verbessern, wodurch die Durchführung der von der Empfängereinrichtung angewendeten Fehlerkorrektur verbessert werden kann.

2. Hochfrequenz-Kommunikationssystem nach Anspruch 1, wobei die Empfängervorrichtung zusätzliche Informationen zur Verbesserung der Synchronisation (222) der Empfängervorrichtung empfängt, um die Decodierung der den Hauptteil des Datenpakets angebenden Bitfolge zu verbessern.

3. Hochfrequenz-Kommunikationssystem nach Anspruch 1, wobei das Datenpaket einen ergänzenden Teil (22) beinhaltet, beinhaltend einen Einleitungsabschnitt (221) und ein erweitertes Längenfeld (223), der die zusätzlichen Informationen über die Länge des Hauptteils des Datenpakets bereitstellt.

4. Hochfrequenz-Kommunikationssystem nach Anspruch 3, wobei der ergänzende Teil von der Empfängervorrichtung vor dem Hauptteil empfangen und in einem Pufferspeicher der Empfängervorrichtung gespeichert wird, und wobei der Empfänger dazu konfiguriert ist, den Synchronisationsabschnitt des Hauptteils zum Synchronisieren der Empfängervorrichtung zu verwenden, um den ergänzenden Teil des Datenpakets zu decodieren.

5. Hochfrequenz-Kommunikationssystem nach Anspruch 3, wobei der ergänzende Teil ferner einen erweiterten Synchronisationsabschnitt (222) umfasst, der die zusätzliche Information zum Verbessern der Synchronisation der Empfängervorrichtung bereitstellt, um die Decodierung des Hauptteils und des zusätzlichen Teils des Datenpakets zu verbessern.

6. Hochfrequenz-Kommunikationssystem nach Anspruch 3 oder 5, wobei der ergänzende Teil vor dem Empfangen des Hauptteils des Datenpakets durch die Empfängervorrichtung empfangen wird.

7. Hochfrequenz-Kommunikationssystem nach Anspruch 3 oder 5, wobei der ergänzende Teil mit einer vorbestimmten Zeitverzögerung (23) nach dem Empfang des Synchronisationsabschnitts des Hauptteils des Datenpakets durch die Empfängervorrichtung empfangen wird.

8. Hochfrequenz-Kommunikationssystem nach Anspruch 1, wobei das Datenpaket einen ergänzenden Teil (22) beinhaltet, der ein erweitertes Längenfeld (223), das die zusätzlichen Informationen über die Länge des Hauptteils des Datenpakets bereitstellt, und einen verbesserten Fehlerkorrekturabschnitt (222) beinhaltet, und wobei der ergänzende Teil mit einer vorbestimmten Zeitverzögerung (23) nach dem Empfang des Synchronisationsabschnitts des Hauptteils des Datenpakets durch die Empfängervorrichtung empfangen wird.

## Revendications

1. Système de communication radiofréquence (1) comprenant au moins un dispositif émetteur (12) configuré pour coder et transmettre un paquet de données (2) à un dispositif récepteur (13, 14, 15, 16) ;
le dispositif récepteur étant configuré pour recevoir, décoder et corriger les erreurs dans une séquence de bits indicative du paquet de données ;
le paquet de données incluant une partie principale conforme à la norme (21) codée selon un protocole standard de communication sans fil, la partie principale comprenant au moins une partie de préambule de paquet (211), une partie de synchronisation (212), un champ de longueur de paquet (213), une partie de charge utile (214) et une partie de correction d'erreurs (216) incluant un code de correction d'erreurs à utiliser par le dispositif récepteur pour corriger les erreurs dans la séquence de bits ;
**caractérisé en ce que** le dispositif récepteur est configuré pour recevoir des informations supplémentaires (222, 223) concernant la longueur de la partie principale (21) du paquet de données (2) adaptées pour améliorer le décodage de la séquence de bits indicative du paquet de données, moyennant quoi les performances de la correction d'erreur appliquée par le dispositif récepteur peuvent être améliorées.

2. Système de communication radiofréquence selon la revendication 1, dans lequel le dispositif récepteur reçoit des informations supplémentaires pour améliorer la synchronisation (222) du dispositif récepteur afin d'améliorer le décodage de la séquence binaire indicative de la partie principale du paquet de données.

3. Système de communication radiofréquence selon la revendication 1, dans lequel le paquet de données inclut une partie supplémentaire (22) incluant une partie de préambule (221) et un champ de longueur amélioré (223) fournissant les informations supplémentaires concernant la longueur de la partie principale du paquet de données.

4. Système de communication radiofréquence selon la revendication 3, dans lequel la partie supplémentaire est reçue par le dispositif récepteur avant la partie principale, et sauvegardée dans une mémoire tampon du dispositif récepteur, et dans lequel le récepteur est configuré pour utiliser la partie de synchronisation de la partie principale pour la synchronisation du dispositif récepteur pour décoder la partie supplémentaire du paquet de données.

5. Système de communication radiofréquence selon la revendication 3, dans lequel la partie supplémentaire inclut en outre une partie de synchronisation étendue (222) fournissant les informations supplémentaires pour améliorer la synchronisation du dispositif récepteur afin d'améliorer le décodage de la partie principale et de la partie supplémentaire du paquet de données.

6. Système de communication radiofréquence selon la revendication 3 ou 5, dans lequel la partie supplémentaire est reçue par le dispositif récepteur avant de recevoir la partie principale du paquet de données.

7. Système de communication radiofréquence selon la revendication 3 ou 5, dans lequel la partie supplémentaire est reçue par le dispositif récepteur avec un retard de temps prédéterminé (23) après réception de la partie de synchronisation de la partie principale du paquet de données.

8. Système de communication radiofréquence selon la revendication 1, dans lequel le paquet de données comprend une partie supplémentaire (22) incluant un champ de longueur améliorée (223) fournissant les informations supplémentaires concernant la longueur de la partie principale du paquet de données et une partie de correction d'erreur améliorée (222), et dans lequel la partie supplémentaire est reçue par le dispositif récepteur avec un retard de temps prédéterminé (23) après réception de la partie de synchronisation de la partie principale du paquet de données.
